# EUROPEAN PATENT APPLICATION

(11) **EP 3 900 549 A1**
(43) Date of publication of application: **27.10.2021**
(21) Application number: 19899777.7
(22) Date of filing: 18.12.2019
(51) Int. Cl.: A23L 13/70

(54) **MEAT IMPROVING AGENT**

(30) Priority: 18.12.2018 JP 2018236369
(71) Applicant: Nisshin Foods Inc., Tokyo 101-8441 (JP)
(72) Inventor: TSUJI, Akito, Tokyo 101-8441 (JP); TAGAMI, Yuji, Tokyo 101-8441 (JP); HIWATASHI, Souichiro, Tokyo 103-8544 (JP); ITO, Takashi, Tokyo 103-8544 (JP)
(74) Representative: Schiener, Jens
(86) International application number: PCT/JP2019/049542
(87) International publication number: WO 2020/130019

(57) **Abstract**

The present invention provides a meat processing material that can be used to provide meat having a soft and juicy texture when cooked by heating and having an increased yield after cooking. Provided are a meat improving agent containing inulin and modified starch; a meat-improving liquid composition containing the meat improving agent; and a method of improving meat, including bringing the meat improving agent or the liquid composition into contact with meat.

## Description

### Technical Field

The present invention relates to a meat improving agent.

### Background Art

Meat, which includes livestock meats such as beef, pork and chicken and seafood such as fish and shellfish, is preferably soft and juicy while having a muscle fiber texture. However, when actually heated, meat loses water and contracts, resulting in a dry and hard texture in many cases. In addition, the meat having lost water and contracted has a decreased volume and a lowered yield, and as a result of which the appearance is not preferable.

Phosphate has been commonly used as an additive for improving the texture and volume reduction of meat. However, from the viewpoint of health consciousness, a phosphate-free meat improving agent has been sought. Patent Literature 1 describes a composition for an edible meat processing, comprising a filler selected from starch, plant proteins, gelatin, egg white, lactose, and casein, a carbonate, ascorbic acid, and acetic acid. Patent Literature 2 describes an improving agent for a processed product of meats, comprising an oligosaccharide, a starchy raw material such as a starch derivative, and a material selected from an organic acid salt, an alkaline agent, and a high-molecular-weight polysaccharide. Patent Literature 3 describes a pickling liquid composition for meat processing, comprising a modified starch and a paste.

Patent Literature 4 describes a seasoning for burning meat with skins, comprising at least one kind selected from saccharide having a melting point of 110°C or less, dextrin of DE18 or more, indigestible dextrin, and inulin and at least one kind selected from starch and cereal flour, wherein the seasoning is attached to the skin of meat and then the skin of meat is burned to make the skin of meat crisply burned. Patent Literature 5 describes a method of adhering powder seasoning containing one or more kinds selected from dextrin of DE18 or more, indigestible dextrin and inulin on a surface of meat with skin and burning to prepare the burnt meat with skin having crispy texture. Patent Literature 6 describes that inulin is used to improve the juiciness of daily meat dishes including minced meat such as dumplings, croquettes, and hamburgers, and to prevent the binding of food ingredients during storage. Patent Literature 7 describes a method for enhancing a gelforming capability by subjecting a marine protein material such as minced fish meat to a saccharification reaction with a reducing sugar such as xylose, ribose, fructose, glucose, lactose, mannose, isomaltose, chitin oligosaccharides, chitin, dextrin, or inulin.

### Citation List

### Patent Literature

Patent Literature 1: JP 8-238073 A
Patent Literature 2: JP 2006-067998 A
Patent Literature 3: JP 9-084555 A
Patent Literature 4: JP 2015-023860 A
Patent Literature 5: JP 2016-005441 A
Patent Literature 6: JP 2007-020521 A
Patent Document 7: WO 2015/146955

### Summary of Invention

### Technical Problem

The present invention relates to a meat improving agent that can improve meat to have a soft and juicy texture when cooked by heating and have an increased yield after cooking.

### Solution to Problem

The present inventors found that a mixture of inulin and modified starch or a liquid containing the mixture is brought into contact with meat to be able to make soft and juicy the texture of the meat after cooked by heating and increase a yield after cooking by suppressing a decrease in weight of the meat after cooked by heating.

Thus, the present invention provides a meat improving agent comprising inulin and modified starch.

The invention provides also a meat-improving liquid composition comprising the meat improving agent.

The present invention provides also a method of improving meat, comprising bringing the meat improving agent or the liquid composition into contact with meat.

Further, the present invention provides also use of a mixture comprising inulin and modified starch for the improvement of meat.

### Advantageous Effects of Invention

A meat improving agent of the present invention can improve meat so as to have a soft and juicy texture, while maintaining a muscle fiber texture, when cooked by heating. In addition, in meat processed by the meat improving agent of the present invention, a decrease in weight of meat after cooked by heating can be reduced to increase a yield after cooking. An improving agent of the present invention can be applied to meat to have an improved texture and appearance after cooking.

### Description of Embodiments

A meat improving agent of the present invention (hereinafter, also simply referred to as an improving agent of the present invention) contains inulin and modified starch as active ingredients. Inulin is a polymer of fructose with glucose attached to the end. The inulin used in the improving agent of the present invention preferably has a fructose polymerization degree of 5 or more and more preferably a fructose polymerization degree of from 10 to 29. Examples of inulin used in the improving agent of the present invention include those extracted from inulincontaining plants such as chicory and Jerusalem artichoke, those produced by microorganisms, and those produced by decomposing them to reduce the fructose polymerization degree. For instance, inulin used in the improving agent of the present invention can be produced by the method described in Japanese Patent No. 4278691 or WO 03/027304. Alternatively, commercially available inulin may be used.

The content of inulin in the improving agent of the present invention with respect to the total mass of the improving agent of the present invention is preferably from 0.5 to 50% by mass, more preferably from 1 to 40% by mass, still more preferably from 5 to 30% by mass, and still more preferably from 15 to 20% by mass. If the content of inulin in the improving agent of the present invention is too low or too high, the texture and yield of meat after cooking is not sufficiently improved in some cases.

The modified starch used in the improving agent of the present invention can be used without particular limitation as long as the modified starch can be utilized for food. Preferable examples of the modified starch include starches that have been subjected to processing such as etherification, esterification, cross-linking, oxidation, or a combination thereof. More preferable examples include etherified starch, esterified starch, crosslinked starch, and oxidized starch. Examples of the etherified starch include hydroxypropyl starch or carboxymethyl starch. Preferred is hydroxypropyl starch. Examples of the esterified starch include acetylated starch, octenyl succinate starch, or phosphate starch. Preferred is acetylated starch or octenyl succinate starch. Examples of the crosslinked starch include phosphate crosslinked starch or adipate crosslinked starch. Preferred is phosphate crosslinked starch. Examples of the oxidized starch include starch treated with an oxidizing agent such as sodium hypochlorite. The modified starches listed above may be used singly or two or more of them may be used in combination.

Preferably, the modified starch used in the present invention is at least one kind selected from the group consisting of etherified starch and esterified starch. A combination of etherified starch and esterified starch is more preferable. Further preferably, the modified starch used in the present invention is at least one selected from the group consisting of hydroxypropyl starch, acetylated starch, and octenyl succinate starch. A combination of hydroxypropyl starch and acetylated starch or octenyl succinate starch is still more preferable. From the viewpoint of storage stability and handling of the improving agent of the present invention, the degree of substitution in the etherified starch or esterified starch used in the present invention is preferably from 0.02 to 0.16 and more preferably from 0.05 to 0.11. Alternatively, commercially available etherified starch or esterified starch may be used in the improving agent of the present invention. The etherified starch or esterified starch may be further crosslinked. As the cross-linking treatment, known procedures such as phosphoric acid cross-linking and adipic acid cross-linking may be used.

The kind of starch used as a raw material for the modified starch used in the present invention is not particularly limited as long as it is edible. Examples include potato starch, wheat starch, tapioca starch, corn starch, rice starch, green bean starch, or sago starch.

The content of the modified starch in the improving agent of the present invention with respect to the total mass of the improving agent of the present invention is preferably from 50 to 99.5% by mass, more preferably from 60 to 99% by mass, still more preferably from 70 to 95% by mass, and still more preferably from 70 to 85% by mass. If the content of the modified starch in the improving agent of the present invention is too small or too large, the texture and yield of meat after cooking is not sufficiently improved in some cases.

The improving agent of the present invention may further optionally contain another component(s) other than the above components. Examples of the other component(s) include at least one or two or more kinds selected from cereal flour such as wheat flour or rice flour; starch other than the above-mentioned modified starch; proteins; saccharides other than inulin; thickeners; salts such as carbonates or phosphates; oils and fats; seasonings such as common salt, soy sauce, fermented seasonings, miso, amino acids; spices; flavors; nutritional components such as vitamins; or colorants. These components may be selected, if appropriate, in accordance with the desired properties of meat to be treated with the improving agent of the present invention. For instance, it is preferable to further add an oil and fat to the improving agent of the present invention because the texture of meat becomes softer. As the oil and fat, an oil and fat having a melting point of 36°C or lower is preferable, and a vegetable oil and fat is more preferable. Examples of the vegetable oil and fat include, but are not limited to, rapeseed oil, soybean oil, corn oil, cottonseed oil, olive oil, palm oil, palm kernel oil, sesame oil, safflower oil, coconut oil, or rice oil. The content of the oil and fat in the improving agent of the present invention with respect to the total mass of the improving agent of the present invention is preferably from 3 to 20% by mass and more preferably from 5 to 15% by mass. In addition, the total content of the above-mentioned other components in the improving agent of the present invention with respect to the total mass of the improving agent of the present invention is preferably 49.5% by mass or less, more preferably 39% by mass or less, still more preferably 25% by mass or less, and still more preferably 15% by mass or less.

The improving agent of the present invention may be in any form like, for instance, a solid, a liquid, or a paste. Preferred is a solid, and more preferred is a powder. The improving agent of the present invention can be stored for a long period of time in a solid form such as a powder as long as the agent is free of liquid component.

The improving agent of the present invention is used to improve meat, more specifically, to give a soft and juicy texture to meat after cooked by heating or to increase the yield of meat after cooked by heating. Thus, as used herein, improving meat preferably means improving the texture and/or the yield of meat after cooking. In addition, as used herein, the yield of meat after cooking refers to the rate of the weight of meat after cooking to the weight of meat before cooking. Improving the yield preferably means an increase in the yield. When an improving agent of the present invention is used, the improving agent of the present invention may be directly applied to meat. Here, a liquid composition containing an improving agent of the present invention may also be applied to meat. For instance, in the case where an improving agent of the present invention may be directly applied to meat, an improving agent in a powder state according to the present invention may be attached to the surface of meat by for example, directly sprinkling the improving agent over the meat. Further, for instance, in the case where a liquid composition containing an improving agent of the present invention may be used, the liquid composition may be sprinkled on meat; meat may be immersed in the liquid composition; meat may be tumbled with the liquid composition; or the liquid composition may be injected into meat.

Meanwhile, the present invention also provides a method of improving meat by using an improving agent of the present invention. In the method of improving meat according to the present invention, the improving agent is brought into contact with meat to improve the meat and impart a soft and juicy texture to the meat after cooked by heating or to improve the yield of the meat after cooked by heating. In the method, the improving agent of the present invention may be used as it is, or may be used in the form of liquid composition containing the improving agent.

The liquid composition containing an improving agent of the present invention may be used as, for instance, a pickling liquid (e.g., a marinade liquid, a pickle liquid) for improving meat, an injection liquid for injection into the inside of meat, or a tumbling liquid. The liquid composition may be prepared by mixing an improving agent of the present invention with moisture content such as water or saline. The pH value of the liquid composition is preferably from 5 to 13, more preferably from 6 to 12, and still more preferably from 6 to 9. If the pH value of the liquid composition is too high or too low, the texture of meat after cooking is not sufficiently improved in some cases. The pH value of the liquid composition can be adjusted by adding a pH modifier. The type of the pH modifier is not particularly limited as long as it can be used in foods, and examples thereof include an organic acid, ammonium salt, carbonate, or phosphate. These pH modifiers may be added when an improving agent of the present invention is mixed with moisture such as water or saline. However, they may be included in the improving agent of the present invention.

The amount of improving agent used in the present invention is preferably from about 2 to 20 parts by mass with respect to 100 parts by mass of meat. In the case of using a liquid composition containing an improving agent of the present invention, the concentration of the improving agent in the liquid composition, the amount of the liquid composition used, and/or the method of application to meat, for instance, may be adjusted such that the amount of improving agent used in the present invention is within the above range. Preferably, the concentration of improving agent of the present invention in the liquid composition is from 10 to 60% by mass.

Examples of meat to be treated with an improving agent of the present invention include livestock meat, animal meat, or seafood. Examples of the livestock meat or animal meat include, but are not limited to, beef, pork, chicken, mutton, venison, horse meat, or goose meat. Examples of the seafood include, but are not limited to, tuna, marlin, cod, squid, shrimp, or shellfish. The site of meat where an improving agent of the present invention is applied is not particularly limited. However, from the viewpoint where a juicy texture can be imparted, it is effective to apply the improving agent to a site with less fat content. In addition, from the viewpoint of exerting the effect of improving the yield, the meat to be treated with an improving agent of the present invention may be shaped like fragmented meat such as minced meat or lump meat. From the viewpoint of exerting the effect of improving the texture, non-fragmented meat (e.g., block meat, fillet meat, or block, fillet, half-body, or whole seafood) is preferable because their size (e.g., a 5-mm square or more and preferably a 10-mm square or more) allows the texture of meat to be felt. An improving agent of the present invention is applicable to the meat (e.g., raw meat or raw seafood) that has not been cooked by heating. The meat may be optionally seasoned before or at the same time as the improving agent of the present invention is applied.

In the present invention, meat treated with an improving agent of the present invention is preferably further cooked by heating. Examples of a means for cooking by heating include, but are not particularly limited to, baking, simmering, steaming, or frying. An improving agent of the present invention may be preferably used in the process of cooking various foods. Examples include roasted foods such as saute and steak; fried foods such as fried chicken and tempura; boiled foods such as curry, stew, and Nishime; steamed food such as steamed chicken; dishes using chunks of meat such as roast beef and roast pork; or dishes using minced meat such as corned beef, hamburger steak, and soboro. In the case of cooking meat in accordance with the present invention, any usual cooking procedure may be followed except that meat that has been brought into contact with an improving agent of the present invention is used as a raw meat material.

### Examples

Hereinafter, the present invention will be described in more detail with reference to Examples. However, the present invention is not limited to the following Examples.

### (Material)

Inulin (Fuji FF: manufactured by Fuji Nihon Seito Corporation)
Modified starch
Hydroxypropyl starch: hydroxypropyl tapioca starch (Yuri Matsutani; Matsutani Chemical Industry Co., Ltd.)
Acetylated starch: acetylated tapioca starch (Nisshoku Nerikomi Starch K-1; NIHON SHOKUHIN KAKO CO., LTD.)
Octenyl succinate starch: octenyl succinate tapioca starch (AMYCOL NYUKA; NIPPON STARCH CHEMICAL CO., LTD.)
Oxidized starch: oxidized corn starch (NDF-100; Nihon Starch Co., Ltd.)
Phosphate crosslinked starch: phosphate crosslinked tapioca starch (Pine Bake CC; Matsutani Chemical Industry Co., Ltd.)
Unmodified starch: potato starch, corn starch

### (Test Example 1)

Inulin and starch were mixed and formulated as shown in Table 1 to obtain a powder mixture. Next, 20 parts by mass of water was added to 10 parts by mass of the resulting mixture, and this mixture was stirred well to prepare a liquid composition. The pH of the resulting liquid composition was measured with a litmus test paper.

Chicken thigh was cut so that one piece is 20 g, immersed in the liquid composition prepared above, and allowed to stand for 30 min. In this way, the liquid composition was attached to the chicken. Soft wheat flour was evenly sprinkled on the surface of the chicken having the liquid composition attached. Subsequently, the chicken was allowed to stand for 5 min for adapting, and the mass was then weighed. Next, each chicken was fried for 4 min in salad oil heated to 170°C to produce fried chicken. As a Reference Example, fried chicken was produced by substantially the same procedure using chicken thigh not immersed in the liquid composition. The fried chicken after fried was cooled at room temperature (at about 25°C) for 1 h, and the oil was drained sufficiently, and the mass was then weighed again. The yields (%) [the mass of chicken after fried / the mass of chicken before fried x 100] for 10 pieces of fried chicken were calculated from the mass of each chicken before or after fried to give an average yield. In addition, the texture of each fried chicken meat left at room temperature for 1 h was evaluated by 10 trained panelists in accordance with the following criteria, and the evaluations of 10 people were averaged.

### (Criteria for Texture)

5: Very soft, juicy and excellent
4: Soft, juicy and good
3: Soft, however, slightly lacking in juiciness
2: Slightly dry or sticky on the surface, somewhat poor
1: Poor due to dryness and surface stickiness

Table 1 shows the results. Each fried chicken prepared from chicken meat having inulin and modified starch attached had an improved yield and texture. By contrast, each fired chicken prepared from chicken meat having either inulin or modified starch not attached or chicken meat having inulin and unmodified starch attached did not exert a sufficient effect.

**[Table 1]**

| Formulation | Production Example | | | | | Comparative Example | | | | | Reference Example |
|---|---|---|---|---|---|---|---|---|---|---|---|
| | 1 | 2 | 3 | 4 | 5 | 1 | 2 | 3 | 4 | 5 | |
| Mixture | | | | | | | | | | | |
| Inulin | 15 | 15 | 15 | 15 | 15 | | 100 | | 15 | 15 | |
| Hydroxypropyl starch | 85 | | | | | | | 100 | | | |
| Acetylated starch | | 85 | | | | | | | | | |
| Octenyl succinate starch | | | 85 | | | | | | | | |
| Oxidized starch | | | | 85 | | | | | | | |
| Phosphate crosslinked starch | | | | | 85 | | | | | | |
| Unmodified potato starch | | | | | | | | | 85 | | |
| Unmodified corn starch | | | | | | | | | | 85 | |
| Total | 100 | 100 | 100 | 100 | 100 | | 100 | 100 | 100 | 100 | |
| Water | 200 | 200 | 200 | 200 | 200 | 200 | 200 | 200 | 200 | 200 | |
| Liquid composition pH | 7 | 7 | 7 | 7 | 7 | 7 | 7 | 7 | 7 | 7 | |
| Yield (%) | 84 | 82 | 83 | 76 | 77 | 67 | 71 | 72 | 74 | 74 | 70 |
| Texture | 4.4 | 4.5 | 4.4 | 4.1 | 4.1 | 1.8 | 2.2 | 2.4 | 2. 7 | 2.6 | 2.0 |

### Test Example 2

Each mixture formulated as shown in Table 2 was used to prepare each fried chicken in the same procedure as in Test Example 1. Then, the yield and the texture were evaluated.

Table 2 shows the results.

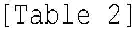

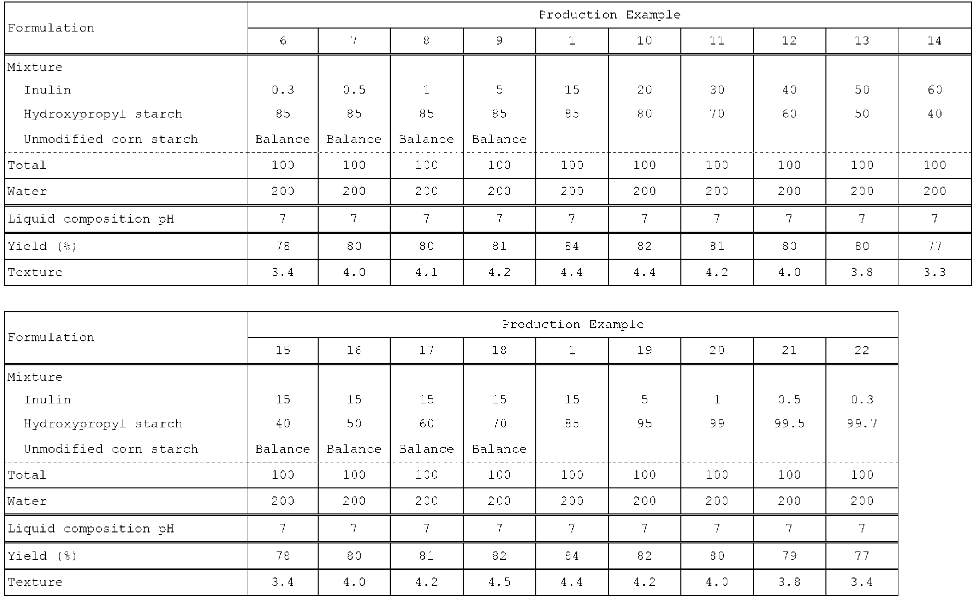

### Test Example 3

Citric acid or sodium carbonate was appropriately added as a pH modifier to each liquid composition formulated as shown in Table 3 to adjust the pH as designated in Table 3. Each fried chicken was prepared using the liquid composition in the same procedure as in Test Example 1, and the yield and texture were evaluated. Table 3 shows the results.

**[Table 3]**

| Formulation | Production Example | | | | | |
|---|---|---|---|---|---|---|
| | 23 | 24 | 25 | 26 | 27 | 28 |
| Mixture | | | | | | |
| Inulin | 15 | 15 | 15 | 15 | 15 | 15 |
| Acetylated starch | 70 | 70 | 70 | 70 | 70 | 70 |
| Unmodified corn starch | Balance | Balance | Balance | Balance | Balance | Balance |
| Total | 100 | 100 | 100 | 100 | 100 | 100 |
| Water | 200 | 200 | 200 | 200 | 200 | 200 |
| Liquid composition pH | 5 | 6 | 7 | 9 | 12 | 13 |
| Yield (%) | 79 | 81 | 82 | 81 | 79 | 77 |
| Texture | 4.1 | 4.4 | 4.6 | 4.5 | 4.3 | 4.0 |

## Claims

1. A meat improving agent comprising inulin and modified starch.

2. The meat improving agent according to claim 1, wherein a content of inulin is from 0.5 to 50% by mass.

3. The meat improving agent according to claim 1 or 2, wherein a content of the modified starch is from 50 to 99.5% by mass.

4. The meat improving agent according to any one of claims 1 to 3, wherein the modified starch is at least one selected from the group consisting of etherified starch, esterified starch, crosslinked starch, and oxidized starch.

5. A meat-improving liquid composition comprising the meat improving agent according to any one of claims 1 to 4.

6. The liquid composition according to claim 5, which has a pH of from 5 to 13.

7. A method of improving meat, comprising bringing the meat improving agent according to any one of claims 1 to 4 or the liquid composition according to claims 5 or 6 into contact with meat.

8. Use of a mixture containing inulin and modified starch for the improvement of meat.

9. The use according to claim 8, wherein a content of inulin in the mixture is from 0.5 to 50% by mass.

10. The use according to claim 8 or 9, wherein a content of the modified starch in the mixture is from 50 to 99.5% by mass.

11. The use according to any one of claims 8 to 10, wherein the modified starch in the mixture is at least one selected from the group consisting of etherified starch, esterified starch, crosslinked starch, and oxidized starch.

12. The use according to any one of claims 8 to 11, wherein the mixture is used in a form of liquid composition containing the mixture.

13. The use according to claim 12, wherein the liquid composition has a pH of from 5 to 13.
